(19) Europäisches Patentamt
European Patent Office
Office européen des brevets

(11) **EP 0 682 465 B1**

(12) **EUROPÄISCHE PATENTSCHRIFT**

(45) Veröffentlichungstag und Bekanntmachung des Hinweises auf die Patenterteilung:
**28.07.1999 Patentblatt 1999/30**

(51) Int Cl.⁶: **H05B 39/04**, H02M 7/5383

(21) Anmeldenummer: **95106674.5**

(22) Anmeldetag: **03.05.1995**

(54) **Schaltungsanordnung zum Betreiben elektrischer Glühlampen**

Circuit for operating incandescent lamps

Circuit pour alimenter des lampes à incandescence

(84) Benannte Vertragsstaaten:
**BE DE FR GB IT NL**

(30) Priorität: **09.05.1994 DE 4416400**

(43) Veröffentlichungstag der Anmeldung:
**15.11.1995 Patentblatt 1995/46**

(73) Patentinhaber: **Patent-Treuhand-Gesellschaft für elektrische Glühlampen mbH
81543 München (DE)**

(72) Erfinder: **Lecheler, Reinhard
D-86633 Neuburg an der Donau (DE)**

(56) Entgegenhaltungen:
**EP-A- 0 466 031**

**Beschreibung**

Die Erfindung betrifft eine Schaltungsanordnung zum Betreiben elektrischer Glühlampen gemäß dem Oberbegriff des Anspruchs 1.

Diese Art von Schaltungsanordnungen werden insbesondere zum Betreiben von Niedervolt-Halogenglühlampen verwendet. Hauptbestandteil ist ein Wechselrichter, beispielsweise ein selbsterregter stromrückgekoppelter Halb- oder Vollbrückenwandler, der die niederfrequente Netzspannung in eine hochfrequente Spannung zerhackt. Diese wird anschließend mittels Leistungsübertrage auf die Niederspannung der zu betreibenden Halogenglühlampen transformiert, z.B. 6, 12 oder 24 V. Solche Schaltungsanordnungen werden deshalb auch als elektronische Konverter bezeichnet. Ihre detaillierte Funktionsweise ist beispielsweise in der EP-PS 264 765 oder der DE-OS 40 11 742 offenbart. Üblicherweise werden die Brückentransistoren eines Wechselrichters durch einen rückgekoppelten Anteil des Ausgangsstromes gesteuert. Dadurch ist nach Ausschalten der Netzspannung ein Steuerimpuls erforderlich, um die HF-Schwingung des Wechselrichters erneut zu initiieren. Gewöhnlich enthalten elektronische Konverter einen Start- oder Triggergenerator, der diese Aufgabe übernimmt.

Durch geeignete Dimensionierung der elektronischen Bauteile läßt sich erreichen, daß die HF-Schwingung des Wechselrichters bei Unterschreiten einer minimalen Versorgungsspannung abbricht, beispielsweise bei jedem Nulldurchgang der Netzspannung. Das jeweilige erneute periodische Anschwingen erfolgt dann ebenfalls durch den Triggergenerator. Dieser Betriebsmodus ermöglicht es auf einfache Weise, eine Leistungssteuerung bzw. -regelung in diese Art von elektronischen Konvertern zu integrieren.

Das Grundprinzip beruht auf einer Beeinflussung der Dauer der Zeitverzögerung zwischen dem Nulldurchgang der Netzspannung und dem Wiederanschwingen des Wechselrichters. Die im zeitlichen Mittel von der Schaltungsanordnung aufgenommene Leistung $\bar{P}$ läßt sich dann gezielt verändern gemäß

$$\overline{P(T_z)} = \frac{1}{T_{1/2} - T_z} \cdot \int_{T_z}^{T_{1/2}} P(t)\,dt = \frac{U_0^2}{R(T_z)} \cdot \left[ \frac{1}{2} + \frac{T_{1/2}}{4\pi(T_{1/2} - T_z)} \cdot \sin(4\pi f \cdot T_z) \right]. \qquad (1)$$

Hier bedeutet $T_{1/2}$ die Dauer einer Netzhalbperiode - bei einer Netzfrequenz f=50 Hz gilt $T_{1/2}$=10 ms-, $T_z$ ist die Dauer der Zeitverzögerung, $U_0$ ist der Spitzenwert der Versorgungsspannung und $R$ ist der Eingangswiderstand des Konverters. Der Eingangswiderstand des Konverters $R(T_z)$ ist wegen der Temperaturabhängigkeit des Lampenwendelwiderstands von der effektiven Lampenspannung und damit auch von $T_z$ abhängig. Für Steuer- und Regelzwecke kann die Stellgröße $T_z$ im Bereich $0 \le T_z \le T_{1/2}$ variiert werden. Es handelt sich also um eine "interne Phasenanschnittsteuerung". In der Praxis ist eine Zeitverzögerung im Bereich $0 \le T_z \le 0,8 \cdot T_{1/2}$ im allgemeinen ausreichend. Für $T_z$=0 wird die maximale Leistung ($\bar{P}=\overline{P_{max}}$) aufgenommen. Für $T_z \ge T_{1/2}$ wird hingegen keine Leistung aufgenommen ($\bar{P}= 0$), weil dann der Kondensator des Triggergenerators die Zündspannung $U_Z$ des Diacs nicht mehr erreicht. Im letzteren Fall wird also nach einem Nulldurchgang der Netzspannung kein Triggersignal erzeugt, ein erneutes Anschwingen des Wechselrichters unterbleibt und folglich wird keine Leistung mehr aufgenommen.

In "Betriebsgeräte und Schaltungen für elektrische Lampen" von C.H. Stern und E. Klein, Siemens Verlag, 1992, S. 301 ist eine Schaltung beschrieben, die von diesem Grundprinzip Gebrauch macht und dafür einen veränderbaren Widerstand beinhaltet. Dieser ist so in Reihe zu einem mit der Versorgungsspannung verbundenen zweiten Widerstand geschaltet, daß ein Spannungsteiler entsteht. Parallel zum veränderbaren Widerstand ist ein Kondensator geschaltet, dessen Ladespannung einen Diac ansteuert. Erreicht die Ladespannung des Kondensators die Zündspannung des Diacs, wird letzterer leitend. Dadurch wird der Basis eines Brückentransistors des als Halbbrückenwandler realisierten Wechselrichters ein Triggersignal zugeführt. Auf diese Weise wird die Schwingung des Wechselrichters nach jedem Nulldurchgang der Netzspannung erneut gestartet. Durch den veränderbaren Widerstand kann die Ladezeit, bis der Kondensator die Zündspannung erreicht hat, beeinflußt, d.h. der Zeitpunkt des Wiederanschwingens innerhalb der 10 ms einer Netzhalbwelle (bei einer Netzfrequenz von 50 Hz) verschoben werden.

Nachteilig bei dieser Schaltung ist, daß ihre Funktion empfindlich von den Toleranzen der verwendeten Bauelemente beeinflußt wird und deshalb für Steueranwendungen ungeeignet ist. Sie wird daher ausschließlich für temperaturabhängige Leistungsrückregelungen eingesetzt. Dazu wird für den veränderbaren Widerstand ein temperaturabhängiger Widerstand verwendet, beispielsweise ein Heißleiter (NTC).

Aufgabe der Erfindung ist es, den genannten Nachteil zu vermeiden und eine Schaltungsanordnung anzugeben, die sich für Regel- und insbesondere auch für Steueranwendungen eignet und mit kostengünstigen Standardbauteilen realisiert werden kann.

Diese Aufgabe wird erfindungsgemäß durch die kennzeichnenden Merkmale des Anspruchs 1 gelöst. Weitere vorteilhafte Ausführungen der Erfindung sind in den Unteransprüchen erläutert.

Der Grundgedanke der Erfindung besteht darin, dem Kondensator des Triggergenerators einen steuerbaren Widerstand geeignet parallel zu schalten. Der momentane Wert des steuerbaren Widerstands hängt dabei derart vom Ladezustand des Kondensators ab, daß sich ein nahezu konstanter, in seinem Absolutwert beeinflußbarer Ladestrom $I$ dieses Kondensators realisieren läßt. Dadurch wird erreicht, daß die Spannung $U$ am Kondensator der Kapazität $C$ proportional zur Ladezeit $t$ ist gemäß

$$U = \frac{I}{C} \cdot t \propto t \qquad \text{für } I, \, C = \text{const.} \tag{2}$$

Diese Vorgehensweise ist für präzise Steueranwendungen aus folgendem Grunde vorteilhaft. Wie aus Gleichung (2) zu ersehen ist, haben kleine Schwankungen $\Delta U_Z$ der Zündspannung $U_Z$ des Diacs, beispielsweise durch Bauteiletoleranzen oder Temperatureinflüsse, nur dazu proportionale Schwankungen $\Delta t_Z = \Delta U_Z \cdot C / I$ der entsprechenden Ladezeit $t_Z$ des Kondensators - im folgenden Zündzeit genannt - zur Folge. In, Gegensatz dazu entspricht das zeitliche Verhalten des Ladestroms bei bisherigen Schaltungen einer Exponentialfunktion. Dadurch ist der Spannungs-Zeit-Verlauf des Kondensators stark nichtlinear, wobei sich die Ladespannung ihrem Maximalwert asymptotisch nähert. Insbesondere, wenn sich die Zündspannung $U_Z$ des Diacs in der Nähe des asymptotischen Bereichs des Spannungs-Zeit-Verlaufs des Kondensators befindet, resultieren kleine Schwankungen $\Delta U_Z$ in überproportionalen Schwankungen $\Delta t_Z$ der Zündzeit $t_Z$ und damit der Leistungsaufnahme des Wechselrichters. Deshalb sind herkömmliche Schaltungen für präzise Steueranwendungen ungeeignet.

Für die erfindungsgemäße Realisierung der Schaltungsanordnung geeignete steuerbare Widerstände sind insbesondere steuerbare Halbleiterbauelemente, beispielsweise bipolare Transistoren oder auch Feldeffekttransistoren.

Im Falle eines bipolaren Transistors als steuerbarem Widerstand ist parallel zur Basis-Emitter-Strecke ein veränderbarer Widerstand geschaltet, beispielsweise ein Potentiometer zur Leistungssteuerung. Geeignet sind auch von äußeren physikalischen Größen - beispielsweise Temperatur oder Lichtstärke - abhängige Widerstände. Damit können temperatur- bzw. lichtstarkeabhängige Leistungssteuerungen realisiert werden. Durch den veranderbaren Widerstand wird der Wert des Ladestroms eines Kondensators beeinflußt, der parallel zur Basis-Kollektor-Strecke des Transistors geschaltet ist. Die so gebildete Reihenschaltung aus Kondensator und veränderbarem Widerstand ist mit ihrem ersten Ende mit dem ersten Pol und mit ihrem zweiten Ende über einen seriellen Widerstand mit dem zweiten Pol der Versorgungsspannung verbunden. Der Verbindungspunkt zwischen dem seriellen Widerstand und der Reihenschaltung aus Kondensator und veränderbarem Widerstand ist mit einem spannungsabhängigen Schaltelement verbunden, beispielsweise einen, Diac. Parallel zum veränderbaren Widerstand ist ein unidirektionales Bauelement geschaltet, beispielsweise eine Diode. Dieses ermöglicht es, daß sich der Kondensator niederohmig entladen kann, sobald seine Spannung die Zündspannung des spannungsabhängigen Schaltelements erreicht. Gesteuert wird der Transistor durch den Ladestrom des Kondensators. Folglich wird der Widerstand der Kollektor-Emitter-Strecke des Transistors durch den Ladezustand des Kondensators beeinflußt. Auf diese Weise wird für die bei Transistoren üblichen großen Stromverstärkungen $\beta = I_K / I_B \gg 1$ ($I_K$, $I_B$ bezeichnen den Kollektor bzw. Basisstrom des Transistors) der Ladestrom des Kondensators erfindungsgemäß nahezu konstant gehalten, wie folgende Abschätzung zeigt.

Für den Strom $I_{R1} = I_K + I_{C_1}$ durch den seriellen Widerstand R1 läßt sich näherungsweise $I_{R1} = \beta \cdot I_B + I_{C_1}$ schreiben, wobei $I_{C_1}$ den Ladestrom des Kondensators bezeichnet. Wegen $I_{C_1} = I_B + U_{R2} / R2$ ($U_{R2}$ bezeichnet die Spannung über dem veränderbaren Widerstand R2) folgt daraus

$$I_{R1} = \beta \left(1 + \frac{1}{\beta}\right) \cdot I_{C1} - \beta \cdot \frac{U_{R1}}{R2}. \tag{3}$$

Für große Verstärkungen $\beta \gg 1$ ergibt sich daraus schließlich für den Ladestrom $I_{C1}$ des Kondensators C1

$$I_{C1} = \frac{I_{R1}}{\beta} + \frac{U_{R2}}{R2} \approx \frac{U_{R2}}{R2}. \tag{4}$$

Dabei kann in Gleichung (4) bei Berücksichtigung realistischer Werte (bei Verwendung eines Transistors vom Typ BC 550C ist $\beta \approx 400$ bis 800, und mit $R2_{max} \approx 25 k\Omega$ ergibt sich $I_{R1} \approx 1 mA$ und $U_{R2} \approx 0,5 V$, d.h. $I_{R1}/\beta \approx 0,0025 mA$ bis $0,00125 mA$ und $U_{R2}/R2 \approx 0,02 mA$) der Term $I_{R1}/\beta$ gegenüber $U_{R2}/R2$ vernachlässigt werden. Damit ist gezeigt, daß durch die Erfindung ein von der Stromverstärkung $\beta$ des Transistors und damit von Exemplarstreuungen bzw. Temperatureinflüssen in guter Näherung unabhängiger Ladestrom $I_{C1}$ des Kondensators C1 erreicht ist.

Wegen $U_{C_1} = t \cdot I_{C_1}/C1$ folgt aus Gleichung (4) schließlich

$$U_{C1} \approx \frac{U_{R2}}{R2 \cdot C1} \cdot t \,. \tag{5}$$

Da sich außerdem während der Ladezeit des Kondensators C1 die Spannung $U_{R2}$ am veränderbaren Widerstand R2 - dies ist die Steuerspannung des Transistors T3 - nur wenig ändert, ist die Spannung $U_{C1}$ am Kondensator C1 im wesentlichen proportional zur Ladezeit $t$ .

Die Zeitdauer $T_0$ schließlich, die nötig ist, um den Kondensator C1 auf eine Spannung $U_{C1} = U_0$ aufzuladen folgt aus Gleichung (5) zu

$$T_0(U_{C1} = U_0) \approx \frac{U_0 \cdot C1}{U_{R2}} \cdot R2 \approx const \cdot R2 \tag{6}$$

und ist ebenfalls nur noch linear vom Wert des veränderbaren Widerstands R2 abhängig. Die Zeitdauer $T_Z$ bis Erreichen der Zündspannung $U_0 = U_Z$ des Diacs errechnet sich gemäß Gleichung (6) zu $T_Z = C1 \cdot R2 \cdot U_Z/U_{R2} \propto R2$. Damit ist wegen Gleichung (1) erfindungsgemäß die Leistungsaufnahme durch den Wert des veränderbaren Widerstands R2 gezielt beeinflußbar.

Für eine konkrete Realisierung einer Leistungssteuerung für die Schaltungsanordnung kann der veränderbare Widerstand R2 als Stellwiderstand, beispielsweise in Form eines Drehpotentiometers ausgeführt sein. Für eine reine temperaturabhängige Leistungsrückregelung ist der Stellwiderstand R2 durch einen temperaturabhängigen Widerstand, beispielsweise einen Kaltleiter (PTC) oder einen Heißleiter (NTC) mit nachfolgendem Inverter zu ersetzen. Für eine Kombination aus temperaturabhängiger Leistungsrückregelung und Leistungssteuerung kann ein geeigneter temperaturabhängiger Widerstand in Reihe zum Stellwiderstand R2 geschaltet werden. In beiden Fällen wird die Schaltungsanordnung vor unzulässig hohen Betriebstemperaturen bzw. thermischer Zerstörung geschützt. Der temperaturabhängige Widerstand ist zu diesem Zweck vorteilhaft innerhalb des Gehäuses und dort bevorzugt in der Nähe von Bauteilen angeordnet, die sich besonders stark erwärmen können, beispielsweise dem Leistungsübertrager oder den Brückentransistoren. Nimmt nun die von der Schaltungsanordnung aufgenommene Leistung zu, beispielsweise in Folge erhöhter Netzspannung, steigt die Temperatur innerhalb der Schaltungsanordnung. Daraufhin steigt ebenfalls die Temperatur des PTC's und folglich dessen Widerstand $R_{PTC}$. Damit erhöht sich auch der gesamte momentan wirksame Basiswiderstand $R_2^{ges} = R_2 + R_{PTC}$ des Transistors T3. Wegen den Gleichungen (1) und (6) wird dadurch die Leistungsaufnahme auf einen kleineren Wert zurückgeregelt und wirkt somit der Ursache entgegen. Als Folge sinkt die Temperatur auf einen Gleichgewichtswert. Dieser ist abhängig von der thermischen Kopplung zwischen Wärmequellen und PTC sowie der Kennlinie des PTC's.

Als steuerbarer Widerstand sind bipolare Transistoren sowohl in NPN- als auch in PNP-Bauweise geeignet. Lediglich die geänderten Polaritäten der Anschlüsse sind bei der Orientierung der Halbleiter-Bauelemente zu berücksichtigen. Die Zuordnung der restlichen Bauelemente bezüglich des Transistors bleibt hingegen erhalten. Ebenso kann als steuerbarer Widerstand auch ein Feldeffekttransistor verwendet werden. Dieser kann vorteilhaft zusätzlich mit einer Zener-Diode verbunden sein, um das Gate-Potential des Feldeffekttransistors um die Durchbruchspannung (ca. 10 V) der Zener-Diode zu erhöhen. Dadurch wirken sich die bei Feldeffekttransistoren üblichen Toleranzen der Steuerspannung (ca. 0,8 V bis 3 V) prozentual weniger stark aus.

Die Erfindung wird anhand der nachfolgenden Ausführungsbeispiele näher erläutert. Es zeigen

Figur 1      ein Ausführungsbeispiel einer Schaltungsanordnung mit einem selbsterregten stromrückgekoppelten Halbbrückenwandler und einem erfindungsgemäßen Triggergenerator mit einer Leistungssteuerung, kombiniert mit einer temperaturabhängigen Leistungsrückregelung, wobei der steuerbare Widerstand als NPN-Transistor realisiert ist

Figur 2      ein weiteres Ausführungsbeispiel eines Triggergenerators mit einer Leistungssteuerung, wobei der steuerbare Widerstand als PNP-Transistor realisiert ist

Figur 3      wie Figur 2, aber mit Feldeffekttransistor als steuerbarem Widerstand.

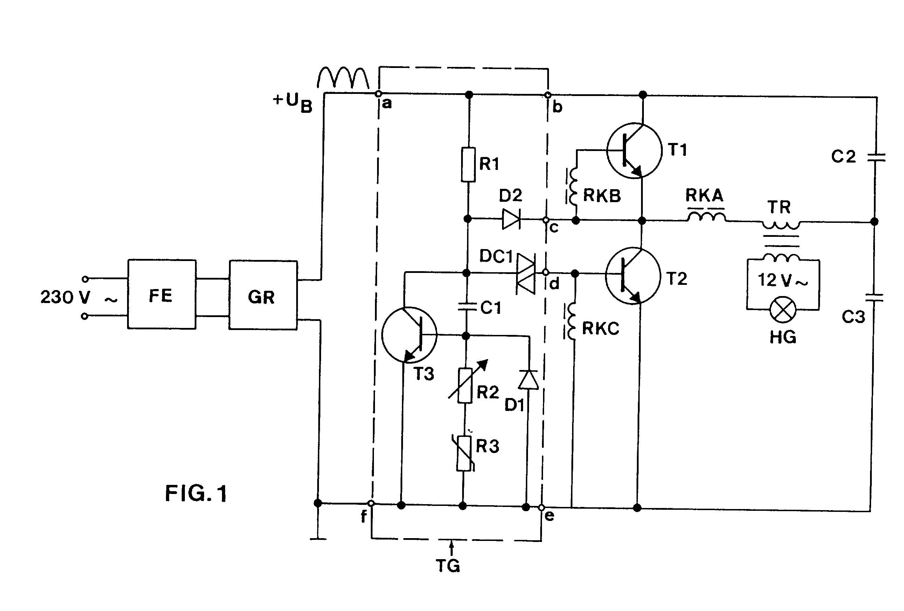

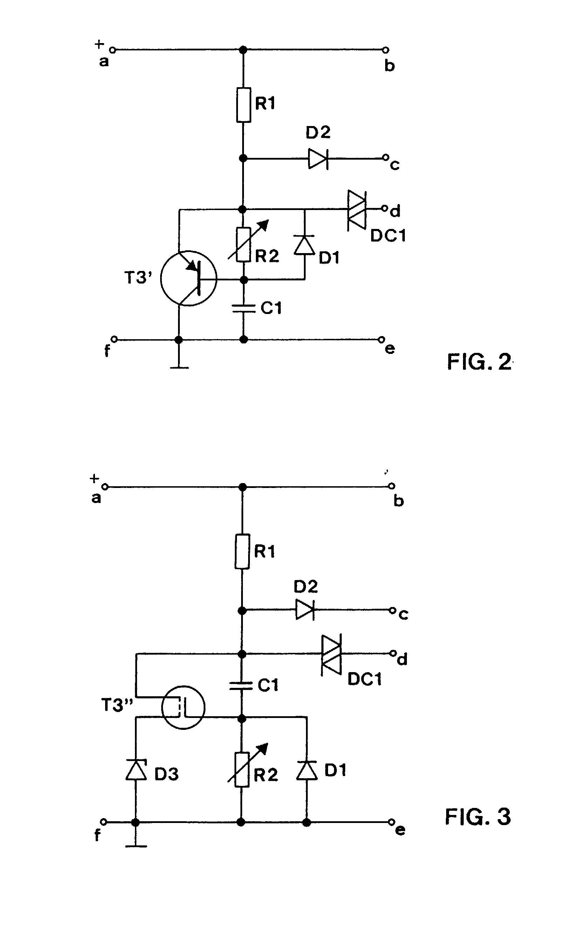

In Figur 1 ist ein Ausführungsbeispiel einer erfindungsgemäßen Schaltungsanordnung dargestellt. Es umfaßt die Funktionsblöcke Funkentstörung FE, Gleichrichter GR, selbsterregter stromrückgekoppelter Halbbrückenwandler - er besteht aus den beiden Halbbrückentransistoren T1,T2, den beiden Halbbrückenkondensatoren C2,C3, dem Steuertransformator RKA-RKC für die Stromrückkopplung sowie dem Leistungsübertrager TR - an seiner Sekundärwicklung wird eine 12 V Halogenglühlampe HG betrieben - , ferner einen Triggergenerator, bestehend aus den Widerständen R1-R3, dem Kondensator C1, dem NPN-Transistor T3, den Dioden D1,D2 und den Diac DC1. Das Schaltbild des Triggergenerators TG mit den Schnittstellen a-f ist von einer unterbrochenen Linie umrahmt. Die Erfindung bezieht sich unmittelbar auf diesen so markierten Teil. In den Figuren 2 und 3 sind weitere Ausführungsbeispiele des erfindungsgemäßen Triggergenerators gezeigt. Der Rest der Schaltungsanordnung ist jeweils identisch zu jenem in Figur 1 und deshalb nicht mehr explizit dargestellt.

Im folgenden wird die Funktionsweise der in Figur 1 gezeigten Schaltungsanordnung näher erläutert. Die Funkentstörung FE schützt in an sich bekannter Weise das Netz vor hochfrequenten Störsignalen des Halbbrückenwandlers und besteht beispielsweise aus einer Entstördrossel und einem oder mehreren Kondensatoren (siehe z.B. H.-J. Meyer, "Stromversorgungen für die Praxis", Vogel Buchverlag, Würzburg, 1989, S. 115-116). Der Gleichrichter GR besteht aus einer Diodenvollbrücke (siehe z.B. W. Hirschmann und A. Hauenstein, "Schaltnetzteile", Siemens AG, 1990, S. 102) und wandelt die Wechselspannung des Netzes in eine pulsierende Gleichspannung $+U_B$. Der negative Pol des Gleichrichters ist im folgenden das Bezugspotential. Die beiden Brückentransistoren T1,T2 werden abwechselnd durch die Signale der beiden Sekundärwicklungen RKB bzw. RKC des Steuerübertragers RKA-RKC angesteuert und schließen den Stromkreis über die Primärwicklungen von Steuerübertrager RKA-RKC und Leistungsübertrager TR, sowie über die beiden Brückenkondensatoren C2 bzw. C3. Die Sekundärwicklung des Leistungsübertragers TR ist mit einer 12 V Halogenglühlampe verbunden. Das Ladeverhalten des Kondensators C1 des Triggergenerators wird durch die seriellen Widerstände R1-R3 sowie den Transistor T3 beeinflußt, wobei der Kollektor-Emitter-Widerstand des Transistors T3 seinerseits vom Ladezustand des Kondensators C1 abhängt. Der veränderbare Widerstand R2 ist als Drehpotentiometer ausgeführt und ermöglicht eine Leistungssteuerung. Der Widerstand R3 ist ein Kaltleiter (PTC) und dient zur Leistungsrückregelung bei Übertemperatur. Die Basis-Kollektor-Strecke des NPN-Transistors T3 ist parallel zum Kondensator C1, und seine Basis-Emitter-Strecke ist parallel zu den beiden Widerständen R2,R3 geschaltet. Dadurch ist die Zeitdauer, die nötig ist bis sich der Kondensator C1 auf die Zündspannung des Diacs DC1 aufgeladen hat, im wesentlichen allein durch die Summe der Werte der veränderbaren Widerstände R2,R3 beeinflußbar und zwar in linearer Weise. Bei durchgeschaltetem Diac DC1 entlädt sich der Kondensator C1 niederohmig über den Diac DC1 sowie die Diode D1 und steuert den Halbbrückentransistor T2 an. Während der Halbbrückenwandler schwingt, wird der Kondensator C1 des Triggergenerators im wesentlichen über die Diode D2 und den Halbbrückentransistor T2 entladen. Dadurch wird verhindert, daß während der Leitendphase des Brückentransistors T2 ein unerwünschtes Triggersignal erzeugt und dem Steuersignal der Sekundärwicklung RKC des Steuerübertragers RKA-RKC überlagert wird. Eine konkrete Dimensionierung der Bauteile ist der nachfolgenden Tabelle zu entnehmen.

Tabelle:

| Bauteileliste für ein Ausführungsbeispiel gemäß der Prinzipschaltung aus Figur 1 | |
|---|---|
| R1 | 270 kΩ |
| R2 | 25 kΩ |
| R3 | PTC: R(T=25°C) ≈ 100 Ω<br>R(T=25°C) ≈ 25 kΩ |
| C1 | 8,2 nF; 100 V |
| C2, C3 | 15 nF; 400 V |
| D1 | 1N4148 |
| D2 | BA157 |
| DC1 | Diac 33V |
| RKA-RKC | R 10/6/4 5/5/1 Wdgen. |
| TR | EF 25/7,5 63/7 Wdgen. |
| T1, T2 | BUL381D |
| T3 | BC850C |
| HG | Halogenglühlampe 12V, 24W |

Figur 2 zeigt ein weiteres Ausführungsbeispiel eines erfindungsgemäßen Triggergenerators mit den Schnittstellen a-f. Es ähnelt jenem aus Figur 1, wobei in diesem Fall allerdings als steuerbarer Widerstand ein PNP-Transistor T3' verwendet und auf den Übertemperaturschutz verzichtet wurde. Der Kollektor des PNP-Transistors T3' ist mit dem Bezugspotential verbunden - das ist der negative Pol der Spannungsquelle -, und sein Emitter ist mit dem Diac DC1 verbunden. Der geänderten Polarität des Transistors entsprechend, ist auch die Reihenfolge von veränderbarem Widerstand R2 und Kondensator C1 bezüglich des Bezugspotentials vertauscht. Die Leistungssteuerung erfolgt mit Hilfe des Widerstands R2.

Figur 3 zeigt ein drittes Ausführungsbeispiel eines erfindungsgemäßen Triggergenerators mit den Schnittstellen a-f. Der steuerbare Widerstand ist hier durch den FET T3" realisiert. Es handelt sich um einen selbstsperrenden n-Kanal MOS-FET vom Anreicherungstyp. Der prinzipielle Aufbau entspricht jenem von Figur 1, wobei der Kollektor-, Basis- und Emitteranschluß des bipolaren Transistors T3 durch den Drain-, Gate- und Sourceanschluß des FET's T3" ersetzt sind. Der Ladestrom des Kondensators C1 - und damit die Leistungsaufnahme der Schaltung - wird wiederum im wesentlichen durch die Größe des veränderbaren Widerstands R2 bestimmt. Die Zener-Diode D3 erhöht das Sourcepotential um den Wert ihrer Durchbruchspannung. Dadurch wirken sich Exemplarstreuungen der Gate-Source-Schwellenspannung prozentual weniger stark auf den für eine gewünschte Ladezeit (d.h. Leistungsaufnahme) notwendigen Wert des veränderbaren Widerstands R2 aus.

Die Erfindung ist nicht durch die angegebenen Ausführungsbeipiele beschränkt. Insbesondere können einzelne Merkmale unterschiedlicher Ausführungsbeispiele auch miteinander kombiniert werden. Der steuerbare Widerstand kann auch durch andere Bauteile realisiert werden, beispielsweise p-Kanal MOS-FET's o.ä.

## Patentansprüche

1. Schaltungsanordnung zum Betreiben elektrischer Glühlampen, insbesondere Niedervolt-Halogenglühlampen, bestehend aus

   - einer Gleichrichterschaltung (GR) und optional einer Filterschaltung (FE)
   - einem selbstschwingenden stromrückgekoppelten Wechselrichter in Halb-oder Vollbrückenschaltung, dessen Schwingung nach jedem Nulldurchgang der Netzspannung abbricht
   - einem Triggergenerator, der mindestens aus einer Reihenschaltung eines Kondensators (C1) und eines ersten Widerstandes (R1) besteht, sowie ein spannungsabhängiges Schaltelement (DC1) beinhaltet, welches mit einem Verbindungspunkt zwischen Kondensator (C1) und erstem Widerstand (R1) einerseits und dem Wechselrichter andererseits verbunden ist, wobei das spannungsabhängige Schaltelement (DC1) durchschaltet und dabei die Schwingung des Wechselrichters startet, sobald das Potential des Verbindungspunktes einen Schwellenwert überschreitet,

   dadurch gekennzeichnet, daß eine Parallelschaltung aus einem zweiten Widerstand (R2,R3) und einem unidirektionalen Bauelement (D1) mit dem Kondensator (C1) verbunden ist, sowie ein steuerbarer Widerstand (T3, T3', T3") mit dieser Parallelschaltung aus zweitem Widerstand (R2,R3) und unidirektionalem Bauelement (D1) einerseits und dem Kondensator (C1) andererseits so verbunden ist, daß der Wert des steuerbaren Widerstandes (T3, T3', T3") durch den Wert des zweiten Widerstands (R2, R3) und den Ladezustand des Kondensators (C1) beeinflußt wird.

2. Schaltungsanordnung nach Anspruch 1, dadurch gekennzeichnet, daß der steuerbare Widerstand als Transistor (T3, T3', T3") realisiert ist.

3. Schaltungsanordnung nach Anspruch 2, dadurch gekennzeichnet, daß der Transistor als bipolarer Transistor (T3, T3') realisiert ist, dessen Basis mit dem Verbindungspunkt zwischen dem Kondensator (C1) und der Parallelschaltung aus zweitem Widerstand (R2,R3) und unidirektionalem Bauelement (D1) verbunden ist.

4. Schaltungsanordnung nach Anspruch 2, dadurch gekennzeichnet, daß der Transistor als Feldeffekttransistor (T3") realisiert ist, dessen Gate mit dem Verbindungspunkt zwischen dem Kondensator (C1) und der Parallelschaltung aus zweitem Widerstand (R2) und unidirektionalem Bauelement (D1) verbunden ist.

5. Schaltungsanordnung nach Anspruch 1, dadurch gekennzeichnet, daß der Wert des zweiten Widerstandes (R2,R3) veränderbar ist.

6. Schaltungsanordnung nach Anspruch 5, dadurch gekennzeichnet, daß der zweite Widerstand als Stellwiderstand (R2) realisiert ist.

**7.** Schaltungsanordnung nach Anspruch 5, dadurch gekennzeichnet, daß der zweite Widerstand als temperaturabhängigen Widerstand (R3) realisiert ist.

**8.** Schaltungsanordnung nach Anspruch 5, dadurch gekennzeichnet, daß der zweite Widerstand als Reihenschaltung aus Stellwiderstand (R2) und temperaturabhängigem Widerstand (R3) realisiert ist.

**9.** Schaltungsanordnung nach einem der Ansprüche 7 und 8, dadurch gekennzeichnet, daß der temperaturabhängige Widerstand (R3) als Kaltleiter (PTC) realisiert ist.

**10.** Schaltungsanordnung nach einem der Ansprüche 7 und 8, dadurch gekennzeichnet, daß der temperaturabhängige Widerstand (R3) als Heißleiter (NTC) mit nachfolgender Inverterschaltung realisiert ist.

**11.** Schaltungsanordnung nach Anspruch 5, dadurch gekennzeichnet, daß der zweite Widerstand als lichtstärkeabhängiger Widerstand mit nachfolgender Inverterschaltung realisiert ist.

**12.** Schaltungsanordnung nach Anspruch 6, dadurch gekennzeichnet, daß der zweite Widerstand als Reihenschaltung aus Stellwiderstand (R2) und lichtstärkeabhängigem Widerstand mit nachfolgender Inverterschaltung realisiert ist.

**13.** Schaltungsanordnung nach Anspruch 1, dadurch gekennzeichnet, daß das spannungsabhängige Schaltelement als Diac (DC1) realisiert ist.

**14.** Schaltungsanordnung nach Anspruch 1, dadurch gekennzeichnet, daß das unidirektionale Bauelement als Diode (D1,D1') realisiert ist.

## Claims

**1.** Circuit arrangement for operating electric incandescent lamps, in particular low-voltage halogen incandescent lamps, comprising

- a rectifier circuit (GR) and, optionally, a filter circuit (FE)
- a self-oscillating inverter with current feedback in a half-bridge or full-bridge circuit, whose oscillation breaks off after each zero crossing of the mains voltage,
- a trigger generator which comprises at least a series circuit of a capacitor (C1) and a first resistor (R1), and also includes a voltage-dependent switching element (DC1) which is connected on the one hand to a tie point between the capacitor (C1) and a first resistor (R1) and on the other hand to the inverter, the voltage-dependent switching element (DC1) switching through and in the process starting the oscillation of the inverter as soon as the potential of the tie point exceeds a threshold value,

characterized in that a parallel circuit composed of a second resistor (R2, R3) and a unidirectional component (D1) is connected to the capacitor (C1), and a controllable resistor (T3, T3', T3") is connected on the one hand to this parallel circuit composed of a second resistor (R2, R3) and unidirectional component (D1), and on the other hand to the capacitor (C1) such that the value of the controllable resistor (T3, T3', T3") is influenced by the value of the second resistor (R2, R3) and the state of charge of the capacitor (C1).

**2.** Circuit arrangement according to Claim 1, characterized in that the controllable resistor is implemented as a transistor (T3, T3', T3").

**3.** Circuit arrangement according to Claim 2, characterized in that the transistor is implemented as a bipolar transistor (T3, T3') whose base is connected to the tie point between the capacitor (C1) and the parallel circuit composed of a second resistor (R2, R3) and unidirectional component (D1).

**4.** Circuit arrangement according to Claim 2, characterized in that the transistor is implemented as a field effect transistor (T3") whose gate is connected to the tie point between the capacitor (C1) and the parallel circuit composed of a second resistor (R2) and unidirectional component (D1).

**5.** Circuit arrangement according to Claim 1, characterized in that the value of the second resistor (R2, R3) is variable.

6. Circuit arrangement according to Claim 5, characterized in that the second resistor is implemented as a rheostat (R2).

7. Circuit arrangement according to Claim 5, characterized in that the second resistor is implemented as a temperature-dependent resistor (R3).

8. Circuit arrangement according to Claim 5, characterized in that the second resistor is implemented as a series circuit composed of a rheostat (R2) and temperature-dependent resistor (R3).

9. Circuit arrangement according to one of Claims 7 and 8, characterized in that the temperature-dependent resistor (R3) is implemented as a PTC thermistor (PTC).

10. Circuit arrangement according to one of Claims 7 and 8, characterized in that the temperature-dependent resistor (R3) is implemented as an NTC thermistor (NTC) with a downstream inverter circuit.

11. Circuit arrangement according to Claim 5, characterized in that the second resistor is implemented as a resistor dependent on luminous intensity with a downstream inverter circuit.

12. Circuit arrangement according to Claim 6, characterized in that the second resistor is implemented as a series circuit composed of a rheostat (R2) and a resistor dependent on luminous intensity with a downstream inverter circuit.

13. Circuit arrangement according to Claim 1, characterized in that the voltage-dependent switching element is implemented as a diac (DC1).

14. Circuit arrangement according to Claim 1, characterized in that the unidirectional component is implemented as a diode (D1, D1').


**Revendications**

1. Montage pour faire fonctionner des lampes électriques à incandescence, notamment des lampes à incandescence à halogène à basse tension, constituées de

   - un circuit (GR) redresseur et, éventuellement, un circuit (FE) filtre,
   - un onduleur auto-hétérodyne, couplé en retour de courant, en circuit en demi-pont ou en circuit en pont intégral, dont l'ondulation fait chuter la tension du secteur après chaque passage en zéro,
   - un générateur de déclenchement, qui est constitué d'au moins un circuit série d'un condensateur (C1) et d'une première résistance (R1), et qui comprend un élément (DC1) de circuit dépendant de la tension qui est relié à un point de liaison entre le condensateur (C1) et la première résistance (R1), d'une part, et l'onduleur, d'autre part, l'élément (DC1) de circuit dépendant de la tension interconnectant et l'ondulation de l'onduleur commençant en l'occurrence dès que le potentiel du point de liaison est supérieur à une valeur seuil,

   caractérisé en ce qu'un circuit parallèle, constitué d'une deuxième résistance (R2, R3) et d'un composant (D1) unidirectionnel est relié au condensateur (C1) et une résistance (T3, T3', T3") pouvant être commandée est reliée d'une part à ce circuit parallèle constitué d'une deuxième résistance (R2, R3) et d'un composant (D1) unidirectionnel et d'autre part au condensateur (C1) de telle manière que la valeur de la résistance (T3, T3', T3") pouvant être commandée est influencée par la valeur de la deuxième résistance (R2, R3) et par l'état de charge du condensateur (C1).

2. Montage suivant la revendication 1, caractérisé en ce que la résistance pouvant être commandée est réalisée en transistor (T3, T3', T3").

3. Montage suivant la revendication 2, caractérisé en ce que le transistor est réalisé en transistor (T3, T3') bipolaire dont la base est reliée au point de liaison entre le condensateur (C1) et le circuit en parallèle constitué d'une deuxième résistance (R2, R3) et d'un composant (D1) unidirectionnel.

4. Montage suivant la revendication 2, caractérisé en ce que le transistor est réalisé en transistor (T3") à effet de champ, dont la grille est reliée au point de liaison entre le condensateur (C1) et le circuit en parallèle constitué d'une deuxième résistance (R2) et d'un composant (D1) unidirectionnel.

5. Montage suivant la revendication 1, caractérisé en ce que l'on peut faire varier la valeur de la deuxième résistance (R2, R3).

6. Montage suivant la revendication 5, caractérisé en ce que la deuxième résistance est réalisée en résistance (R2) de réglage.

7. Montage suivant la revendication 5, caractérisé en ce que la deuxième résistance est réalisée en résistance (R3) dépendant de la température.

8. Montage suivant la revendication 5, caractérisé en ce que la deuxième résistance est réalisée en circuit série constitué d'une résistance (R2) de réglage et d'une résistance (R3) dépendant de la température.

9. Montage suivant l'une des revendications 7 et 8, caractérisé en ce que la résistance (R3) dépendant de la température est réalisée en thermistor à coefficient positif de température (PTC).

10. Montage suivant l'une des revendications 7 et 8, caractérisé en ce que la résistance (R3) dépendant de la température est réalisée en thermistor à coefficient négatif de température (NTC) avec circuit inverseur en aval.

11. Montage suivant la revendication 5, caractérisé en ce que la deuxième résistance est réalisée en résistance dépendant de l'intensité lumineuse avec un circuit inverseur en aval.

12. Montage suivant la revendication 6, caractérisé en ce que la deuxième résistance est réalisée en circuit série constitué d'une résistance (R2) de réglage et d'une résistance dépendant de l'intensité de la lumière avec un circuit inverseur en aval.

13. Montage suivant la revendication 1, caractérisé en ce que l'élément de circuit dépendant de la tension est réalisé en diac (DC1).

14. Montage suivant la revendication 1, caractérisé en ce que le composant unidirectionnel est réalisé en diode (D1, D1').

FIG.1

FIG. 2

FIG. 3